# EUROPEAN PATENT APPLICATION

(11) **EP 4 603 456 A1**
(43) Date of publication of application: **20.08.2025**
(21) Application number: 24218312.7
(22) Date of filing: 09.12.2024
(51) Int. Cl.: C01C 1/04, B01J 8/02, B01J 19/12

(54) **AMMONIA SYNTHESIS SYSTEM AND OPERATION METHOD THEREOF**

(30) Priority: 08.01.2024 KR 20240002649; 08.02.2024 KR 20240019389
(71) Applicant: SK Innovation Co., Ltd., Seoul 03188 (KR)
(72) Inventor: JEONG, Jae Hun, 34124 Daejeon (KR); SONG, Da Eun, 34124 Daejeon (KR); LEE, Jun Young, 34124 Daejeon (KR); IM, Ju Hwan, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

A ammonia synthesis system, an operation method thereof, and an ammonia synthesis method are provided. The system includes a compressor for compressing mixed gas; a feed supply line for supplying the mixed gas to the compressor; an ammonia synthesis reactor for synthesizing ammonia by feeding the mixed gas compressed by the compressor into the reactor; an ammonia separation device for separating syngas produced by the ammonia synthesis reactor into ammonia and a regeneration stream; a feed recirculation line for recirculating the regeneration stream to the feed supply line; and a buffer tank installed in the feed recirculation line.

## Description

### TECHNICAL FIELD

The following disclosure relates to an ammonia synthesis system and an operation method thereof.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find ways for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and pressures of 8.5 atmospheres or higher, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the main raw materials for the ammonia synthesis, may be produced by a water electrolyzer powered by renewable energy such as solar or wind energy, although these renewable energy sources have temporal variability. It is in this context that the embodiments of the present disclosure arise.

### SUMMARY

One embodiment of the present disclosure is directed to providing an ammonia synthesis system which may cope with a change in a flow rate that occurs during a production cycle.

Another embodiment of the present disclosure is directed to providing an ammonia synthesis system which may maintain a uniform flow rate distribution at the front end of a catalyst bed included in an ammonia synthesis reactor even when a flow rate of a raw material, such as hydrogen, fed into the ammonia synthesis system is decreased, in particular if the decrease in flow rate is substantial.

Still another embodiment of the present disclosure is directed to providing an ammonia synthesis system which may improve an ammonia synthesis yield by reducing a temperature deviation between the central part (also referred to as inner part) and the outer part (also referred to as outer side part) of a catalyst bed to be uniform at the beginning of its operation.

One embodiment of the present disclosure is directed to providing an ammonia synthesis system which may improve an ammonia synthesis yield at the beginning of its operation by preheating a catalyst bed before the beginning of its operation.

Another embodiment of the present disclosure is directed to providing an ammonia synthesis system which may save energy by optimizing an amount of energy required by the system during its operation.

Another embodiment of the present disclosure is directed to providing an ammonia synthesis system which may increase a catalyst replacement cycle by uniformly using each catalyst bed during the operation.

Another embodiment of the present disclosure is directed to providing an ammonia synthesis system which may have a stably operated compressor, by preventing that a surge phenomenon or a similar disturbance or phenomenon may occur in the compressor even when a flow rate of a raw material fed into the ammonia synthesis system changes.

In one embodiment, provided is an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; an ammonia separation device for separating syngas produced by the ammonia synthesis reactor into ammonia and a regeneration stream; a feed recirculation line for recirculating the regeneration stream to the feed supply line; and a buffer tank installed in the feed recirculation line.

An expander may be installed upstream from the buffer tank in the feed recirculation line.

The system may further include a reactor recirculation line connected from the feed recirculation line to the ammonia synthesis reactor.

The ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

The system may further include a microwave heating device for emitting microwaves to each of the two or more catalyst beds.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate, a plurality of upper apertures may be formed in a side surface of an upper part of the mixed gas flow pipe spaced apart from each other along a circumference of the pipe, a plurality of middle apertures may be formed in a side surface of a middle part of the mixed gas flow pipe spaced apart from each other along the circumference, a plurality of lower apertures may be formed in a side surface of a lower part of the mixed gas flow pipe spaced apart from each other along the circumference, and optionally the mixed gas flow pipe may include a cover surrounding at least some regions of the side surface of the mixed gas flow pipe to provide a space for a fluid flowing out of the side surface of the mixed gas flow pipe after passing through the upper aperture to be guided toward the middle aperture.

The mixed gas flow pipe may further include a separator plate dividing the upper and middle parts of the mixed gas flow pipe from each other.

The system may further include a heat exchanger disposed downstream from each of the two or more catalyst beds to remove heat from an effluent of the catalyst bed.

In another embodiment, provided is an operation method of the ammonia synthesis system described above, the method including the following selectively performed modes a first mode in which the regeneration stream is recirculated to the feed supply line; and a second mode in which the regeneration stream is not recirculated to the feed supply line.

In another embodiment the operation method of the ammonia synthesis system may selectively switch between the first and second modes dependent on a flow rate of raw material fed into the reactor, whereby the flow rate of the raw material fed into the ammonia synthesis reactor is kept constant. Optionally, the regeneration stream may not be fed through the recirculation line to the reactor when the raw material fed into the reactor is high or relatively high, and the regeneration stream may be fed through the recirculation line to the reactor when the raw material fed into the reactor is low or relatively low.

In another embodiment the operation method of the ammonia synthesis system may selectively switch between the first mode and the second mode dependent on the flow rate of the raw material in order to keep a compressor operation stable. Optionally, the regeneration stream may be stored in the buffer tank and may not be supplied to the feed supply line as in the second mode, when the raw material fed into the reactor has a high or relatively high flow rate, whereas the regeneration stream may be supplied to the feed supply line as in the first mode and may not be stored in the buffer tank, when the raw material fed into the reactor has a relatively low or low flow rate.

In still another embodiment, provided is an ammonia synthesis method including compressing mixed gas by a compressor and feeding the compressed gas into an ammonia synthesis reactor; producing syngas including ammonia by reacting the compressed mixed gas by the ammonia synthesis reactor; and separating the syngas produced into ammonia and a regeneration stream, wherein the regeneration stream is recirculated to the compressor.

The method may further include recovering energy included in the regeneration stream.

The ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

Other features and aspects will be apparent from the following detailed description, the drawings, and the claims.

### BRIEF DESCRIPTION OF THE DRAWINGS

FIG. 1 is a schematic view showing an ammonia synthesis reactor according to one embodiment of the present disclosure.
FIG. 2 is a schematic view showing an ammonia synthesis reactor according to another embodiment of the present disclosure.
FIG. 3 is a perspective view showing a distribution plate and a mixed gas flow pipe according to another embodiment of the present disclosure.
FIG. 4 is a perspective view showing the inside of the mixed gas flow pipe according to one embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to another embodiment of the present disclosure.
FIG. 7 is a view showing a state where the backflow prevention cap of the backflow prevention plate is opened according to another embodiment of the present disclosure.
FIG. 8 shows a process flow view of the ammonia synthesis system according to another embodiment of the present disclosure.

### DETAILED DESCRIPTION

Various advantages and features of the present disclosure and methods for accomplishing the same are apparent from embodiments described in detail below. However, the embodiments of the present disclosure are not limited to the embodiments disclosed below, and may be implemented in various different forms. These embodiments are provided to allow those skilled in the art to appreciate the scope of the present disclosure.

Unless defined otherwise, all terms (including technical and scientific terms) used in the specification have the same meanings as understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the extent and width of the defined range, all values delimited by those limits, and all possible combinations of the upper and lower limits of a numerical range delimited by different extents. The defined numerical range may also include values outside the numerical range, which may occur due to experimental errors or rounding of values unless otherwise specified in the specification.

A term "to include" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower", or terms like "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

In the specification, "regeneration stream" and "sweep gas" indicate gas including hydrogen and nitrogen, and may further include a small amount of unseparated ammonia.

In the specification, "mixed gas" indicates a gas including at least one or both selected from the group consisting of hydrogen and nitrogen.

In the specification, the terms "syngas" and "ammonia rich gas" indicate gas including ammonia and unreacted hydrogen and nitrogen.

Renewable energy, such as solar energy or wind energy, shows temporal variability. For example, the solar energy is unable to be used at night. Therefore, an ammonia synthesis system is unable to be always operated at a constant flow rate, and it is thus necessary to anticipate and handle a change in the flow rate that occurs during a production cycle.

In addition, the non-uniformity of a flow rate distribution at the front of a catalyst bed included in an ammonia synthesis reactor may be increased when a flow rate of the raw material such as hydrogen fed into the ammonia synthesis system is decreased.

In addition, in a conventional ammonia synthesis system, a temperature deviation may occur between the central and outer parts of the catalyst bed especially at the beginning of its operation, which may reduce an ammonia synthesis yield.

In addition, when the flow rate of the raw material fed to the ammonia synthesis system is changed, for example, when the flow rate of the fed raw material is decreased, a surge phenomenon may occur in a compressor, thus making it difficult to perform a stable compressor operation.

Therefore, there is a need for an ammonia synthesis system which may cope with the change in the flow rate that occurs during the production cycle, while preventing the surge phenomenon from occurring in the compressor and permitting stable compressor operation, and which may address the issues of a) non-uniform flow rate distribution that occurs at the front of the catalyst bed and b) reduced ammonia synthesis yield caused by the temperature deviation between the central and outer parts of the catalyst bed at the beginning of the operation.

Hereinafter, an ammonia synthesis system of the present disclosure is described in detail. However, the embodiments are only illustrative, and the present disclosure is not limited to the specific embodiments described below.

The embodiments of the present disclosure may provide an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; an ammonia separation device for separating syngas produced by the ammonia synthesis reactor into ammonia and a regeneration stream; and a feed recirculation line for recirculating the regeneration stream to the feed supply line, wherein a buffer tank is installed in the feed recirculation line.

The ammonia synthesis system of the present disclosure may cope with a change in a flow rate that occurs during a production cycle, while preventing a surge phenomenon from occurring in the compressor to permit a stable compressor operation, while addressing the issues of a non-uniform flow rate distribution that occurs at the front of a catalyst bed and a reduced ammonia synthesis yield caused by a temperature deviation between the central and outer parts of the catalyst bed at the beginning of its operation. In particular, in the ammonia synthesis system of the present disclosure the compressor may stably operate by preventing that the surge phenomenon (or similar phenomenon or disturbance) occurs in the compressor even when the flow rate of a raw material fed into the ammonia synthesis system is changed or is changing. This configuration is possible by supplying the regeneration stream separated from the ammonia separation device to the feed supply line, which is disposed before the compressor, through the feed recirculation line.

In the ammonia synthesis system according to one embodiment, a buffer tank may be installed in the feed recirculation line. The buffer tank may be installed in the feed recirculation line to thus store the regeneration stream flowing in through the feed recirculation line, thereby coping with the change in the flow rate of the fed ammonia synthesis raw material. For example, when the flow rate of the raw material fed into the compressor is high, the regeneration stream may be stored in the buffer tank instead of being supplied to the feed supply line. In addition, when the flow rate of the raw material fed into the compressor is low, the surge phenomenon may occur in the compressor, which may be prevented by supplying the regeneration stream stored in the buffer tank to the feed supply line. In addition, when the flow rate of the raw material is continuously insufficient, a portion of the regeneration stream stored in the buffer tank may be continuously supplied to the feed supply line, which may be performed by regulating the flow control device disposed downstream from the buffer tank described below. The buffer tank may provide for a flexible supply of the regeneration stream to cope with changes in the flow rate of the raw material and permit stable compressor operation.

In another embodiment according to the present disclosure, an expander may be installed upstream of the buffer tank in the feed recirculation line. The regeneration stream recirculated through the feed recirculation line may have a high pressure, and energy included in this high pressure regeneration stream may be recovered through the expander. A form of the energy recovered through the expander may be electrical energy, but the embodiments are not limited thereto.

In another embodiment according to the present disclosure, the expander may include at least one or both selected from the group consisting of a reciprocating expander and a turbo expander. Two or more expanders may be connected in series or parallel with each other.

In addition, a flow regulating device may be installed upstream from the buffer tank or the expander in the feed recirculation line. The flow regulating device may be installed upstream from the buffer tank or the expander to thus regulate the flow rate of the regeneration stream flowing into the buffer tank or the expander, thereby flexibly coping with changes in the flow rate.

The flow regulating device may be installed downstream from the buffer tank in the feed recirculation line. The flow regulating device may be installed downstream from the buffer tank to thus regulate the flow rate of the regeneration stream ultimately supplied to the feed supply line. For example, when the flow rate of the fed raw material is high, the flow regulating device may be closed for the regeneration stream to be stored in the buffer tank rather than having the regeneration stream supplied to the feed supply line. In addition, when the flow rate of the fed raw material is low, the surge phenomenon may occur in the compressor, which may be prevented by opening the flow regulating device and supplying the regeneration stream stored in the buffer tank to the feed supply line. The flow regulating device may permit the flexible supply of the regeneration stream to cope with changes in the flow rate of the raw material and permit stable compressor operation.

In one embodiment according to the present disclosure, the ammonia synthesis system may include an ammonia separation device for separating the syngas into ammonia and the regeneration stream. The ammonia separation may be performed by a conventional method.

In detail, the ammonia separation may be performed by cooling the syngas to separate the gas and liquid from each other. The gas-liquid separation may be performed once or performed twice or more.

The ammonia separation device may cool the syngas by exchanging heat with a refrigerant. The refrigerant may include at least one or more selected from the group consisting of chlorofluorocarbons (CFCs), hydrochlorofluorocarbons (HCFCs), hydrofluorocarbons (HFCs), hydrofluoroolefins (HFOs), fluorinated ether compounds, hydrocarbons, ammonia, water, air, carbon dioxide, and sulfur dioxide, but the embodiments are not limited thereto.

The gas-liquid separation may be performed by condensing (in ranges of) 50 to 99.9999 vol%, 60 to 99.999 vol%, or 70 to 99.99 vol% of ammonia included in the syngas.

The gas-liquid separation may be performed by condensing ammonia at a temperature ranging from -150 to 200°C or -100 to 50°C. In addition, the gas-liquid separation may be performed by condensing ammonia under pressures ranging from 0.0001 to 30 megapascal (MPa) or 0.007 to 20.0 MPa.

The ammonia separation device may be at least one or more selected from the group consisting of a spiral heat exchanger, a plate heat exchanger, a double-tube heat exchanger, a multi-tube cylindrical heat exchanger (shell-and-tube heat exchanger), a multi-tubular heat exchanger, a spiral tube heat exchanger, and a spiral plate heat exchanger, but the embodiments are not limited thereto.

In addition, the ammonia synthesis system may further include an adsorption device including an adsorbent and installed before or after the ammonia separation device.

The adsorbent may be at least one or more selected from the group consisting of silica gel, zeolite, and activated carbon, but the embodiments are not limited thereto, and may use a conventional adsorbent.

In another embodiment according to the present disclosure, the ammonia synthesis system may further include a reactor recirculation line connected from the feed recirculation line to the ammonia synthesis reactor. The high pressure regeneration stream, as it is, without passing through the expander or other components, may be re-fed back into the ammonia synthesis reactor through the reactor recirculation line. In particular, even when the flow rate of the raw material is changed or changes, the regeneration stream without passing through the expander or other components is re-fed into the ammonia synthesis reactor through the reactor recirculation line, thereby maintaining a constant flow rate of the fed raw material in the ammonia synthesis reactor. For example, if the flow rate of the raw material fed into the reactor is high or relatively high, the reactor may be operated for the regeneration stream not to be fed through the recirculation line. On the other hand, when the flow rate of the raw material fed into the reactor is low or relatively low, the ammonia reaction may be operated stably by operating the regeneration stream to be fed into the reactor through the reactor recirculation line for the flow rate of the raw material fed into the ammonia synthesis reactor to be maintained to be constant.

The reactor recirculation line may be directly connected to the ammonia synthesis reactor. In addition, the reactor recirculation line may be connected to each of mixed gas supply lines described below or connected to one of the mixed gas supply lines. In addition, the reactor recirculation line may be connected to a main header of the mixed gas supply line described below, but the embodiments are not limited thereto.

The flow regulating device may be installed in the reactor recirculation line. The flow regulating device may be installed in the reactor recirculation line to thus regulate the flow rate of the regeneration stream directly fed to the reactor without passing through the expander (or a similar or other component), thereby being operated flexibly by coping with changes in the flow rate of the raw material.

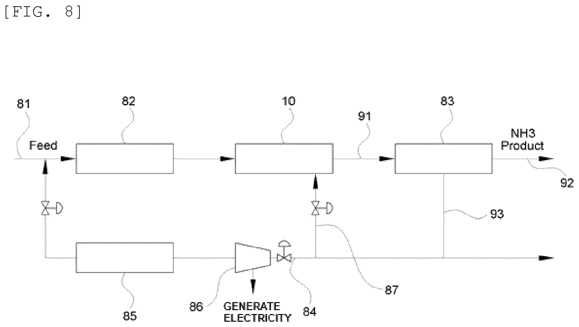

Referring to FIG. 8, the mixed gas may be fed into a compressor 82 through a feed supply line 81. The mixed gas compressed by the compressor 82 may be fed into an ammonia synthesis reactor 10. Syngas 91 produced through the reaction by the ammonia synthesis reactor 10 may be fed into an ammonia separation device 83 and separated into ammonia 92 and a regeneration stream 93. The regeneration stream 93 may be recirculated to the feed supply line 81 through an expander 86 and a buffer tank 85 along a feed recirculation line 84. The regeneration stream 93 may also be re-fed into the ammonia synthesis reactor 10 through a reactor recirculation line 87 connected to the ammonia synthesis reactor 10 from the feed recirculation line 84.

In another embodiment according to the present disclosure, the ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

In addition, the ammonia synthesis reactor may further include a microwave heating device for emitting microwaves to each of the two or more catalyst beds.

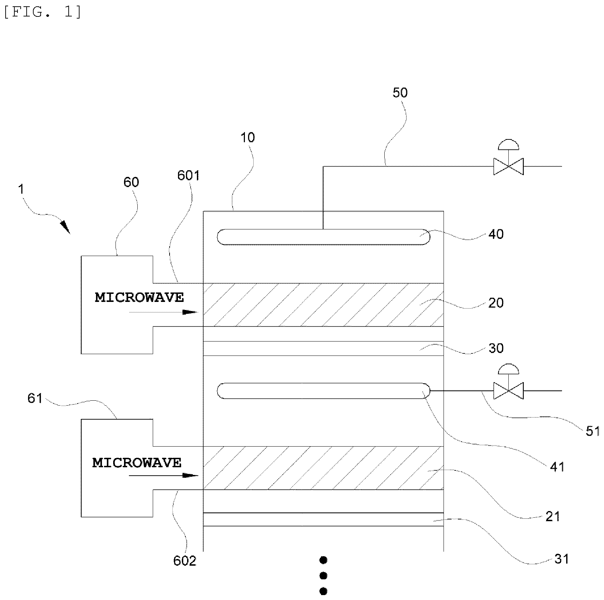

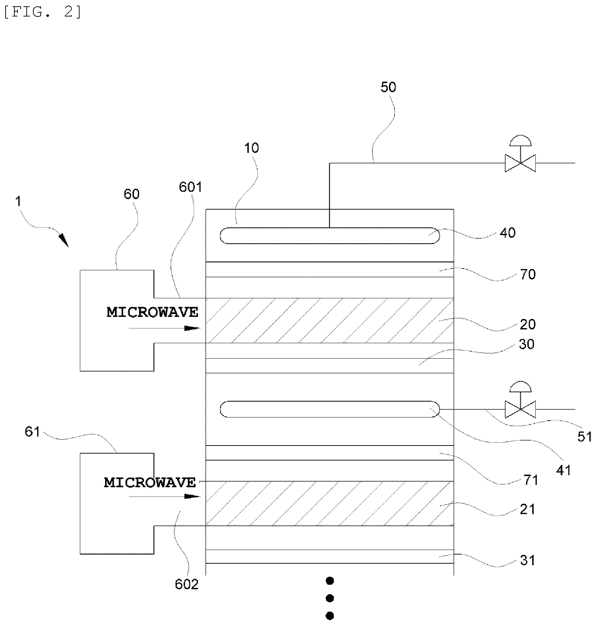

Referring to FIGS. 1 and 2, according to one embodiment of the present disclosure, provided is the ammonia synthesis reactor 10 including two or more catalyst beds 20 and 21; a backflow prevention plate 30 or 31 disposed downstream from each of the catalyst beds and preventing the backflow of the mixed gas; a distribution device 40 or 41 disposed upstream from each of the two or more catalyst beds 20 and 21 and distributing the mixed gas to the catalyst bed 20 or 21; mixed gas supply lines 50 and 51 arranged to supply the mixed gas to each distribution device 40 or 41; and a microwave heating device 60 or 61 for emitting the microwaves to each of the two or more catalyst beds 20 and 21.

Hereinafter, the ammonia synthesis reactor including two catalyst beds may be an example of the ammonia synthesis reactor 10 of the present disclosure. The ammonia synthesis reactor 10 according to one embodiment of the present disclosure may include two or more catalyst beds, for example, three, four, five, seven, or ten catalyst beds. The embodiments are not limited to these numbers of catalyst beds.

The ammonia synthesis system according to another embodiment of the present disclosure may cope with the change in the flow rate that occurs during the production cycle by including the mixed gas supply line to supply the mixed gas to each of the two or more catalyst beds. For example, the ammonia synthesis system may be operated by feeding the gas through the mixed gas supply line 50 disposed at the top for the gas to first pass through the catalyst bed 20 disposed at the top when the flow rate of the fed raw material is high, and operated by feeding the mixed gas through the mixed gas supply line 51 disposed at the bottom for the gas to pass through the catalyst bed 21 disposed at the bottom rather than the catalyst bed 20 disposed at the top when the flow rate of the fed raw material is low. Here, the backflow of the mixed gas may be prevented by the backflow prevention plate 30 when the mixed gas is fed through the mixed gas supply line 51 disposed at the bottom to pass through the catalyst bed 21 disposed at the bottom.

Here, in the specification, the flow rate that can be changed during the production cycle may be classified into three categories for the sake of convenience, not limitation. The flow rate may be classified into a relatively low oer relatively high flow rates, or may be classified into a low flow rate, a medium flow rate, and a high flow rate. However, the change in the flow rate may be regulated. The relatively low or low flow rate case may indicate a case where the flow rate is less than half (50%) of an annual average production flow rate (100%), the medium flow rate case may indicate a case where the flow rate is half (50%) or more and less than twice (200%) of the annual average production flow rate (100%), and the relatively high or high flow rate case may indicate a case where the flow rate is more than twice (200%) of the annual average production flow rate (100%). However, the embodiments are not limited to these flowrates or classifications.

In the low flow rate case as described above, there is no need to maintain a temperature of the entire reactor because the ammonia synthesis system may be operated by feeding the mixed gas through the mixed gas supply line 51 disposed at the bottom for the gas to pass through the catalyst bed 21 disposed at the bottom. Therefore, the energy may be saved by optimizing an amount of energy required by the system as needed during its operation.

In addition, the ammonia synthesis system may increase the catalyst replacement cycle by using each catalyst bed uniformly during its operation. In general, when a reaction fluid has the low flow rate, distribution performance at the top of the catalyst bed may be reduced, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to lower distribution performance caused by a reduced flow rate. However, the catalyst replacement cycle may be increased by relatively uniformly using the catalyst beds if a height of the catalyst bed through which the gas passes is changed based on the flow rate, in which case the distribution performance of each catalyst bed is improved, as in one embodiment of the ammonia synthesis system according to the present disclosure.

In addition, the ammonia synthesis system according to another embodiment of the present disclosure may include the microwave heating devices 60 and 61 to permit the temperature between the central and outer parts of the catalyst bed to be made more uniform (less temperature deviation) at the beginning of its operation, thereby improving an ammonia synthesis yield. In detail, the microwave heating device may permit the temperatures between the central and outer parts of the catalyst bed to be more uniform by emitting the microwaves to the catalyst bed at the beginning of the operation. In addition, the microwave heating device may improve the ammonia synthesis yield at the beginning of the operation by preheating the catalyst bed which may otherwise be not sufficiently preheated at the beginning of the operation.

For example, when the fed raw material has the low flow rate, the ammonia synthesis system may be operated for the gas to pass through the catalyst bed 21 disposed at the bottom rather than the catalyst bed 20 disposed at the top. Here, the mixed gas may not be fed into the catalyst bed 20 disposed at the top, and a temperature of the catalyst bed 20 disposed at the top may thus be decreased over time. If the catalyst bed 20 disposed at the top is used again after this decrease, the ammonia synthesis efficiency may be lower because the temperature of the catalyst bed 20 disposed at the top is decreased. Here, the catalyst bed 20 disposed at the top, which has the lower temperature, may be preheated by the microwaves emitted by the microwave heating device, thus achieving excellent ammonia synthesis efficiency even when the catalyst bed is used again for the operation.

One or more, two or more, three or more, four or more, five or more, or eight or more microwave heating devices may be installed on each catalyst bed, and the number of microwave heating devices is not limited thereto. The number of the microwave heating devices may be increased based on a size of the reactor, and an installation location of the microwave heating device may be adjusted for efficient microwave emission.

The ammonia synthesis system may further include microwave guides 601 and 602. The microwave guide may enable the microwaves emitted by the microwave heating device to reach the catalyst bed more efficiently. The shape or installation location of the guide may be changed based on a microwave waveform.

In another embodiment according to the present disclosure, the number of catalyst beds may be two or more, three or more, four or more, five or more, six or more, seven or more, ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same as each other.

In one embodiment according to the present disclosure, the mixed gas may include at least one gas or both gasses selected from the group consisting of hydrogen and nitrogen.

Hydrogen may be produced by a device powered by renewable energy. In detail, hydrogen may be produced by a water electrolyzer powered using renewable energy.

Renewable energy may include at least one or more selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at the constant flow rate. That is, there is a need for the ammonia synthesis system which may cope with the change in the flow rate that occurs during the production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a way of cooling the mixed gas flowing in the ammonia synthesis system. For example, the mixed gas having the low temperature may be used as the cooling mechanism to cool the mixed gas fed into the catalyst bed.

The ammonia synthesis system according to another embodiment of the present disclosure may further include distribution plates 70 and 71 each disposed between the catalyst bed 20 or 21 and the distribution device 40 or 41.

In addition, the ammonia synthesis system according to another embodiment of the present disclosure may further include a plurality of mixed gas flow pipes 720 which are fixed to a lower surface 72 of the distribution plate 70 or 71 and through which the mixed gas flows.

The ammonia synthesis system may further include the distribution plate and the mixed gas flow pipe, thereby maintaining the uniform flow rate distribution at the front of the catalyst bed included in the ammonia synthesis reactor even when the flow rate of the fed raw material such as hydrogen is reduced.

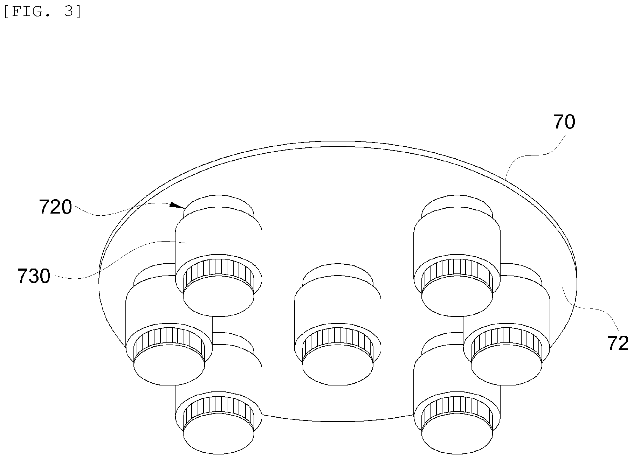

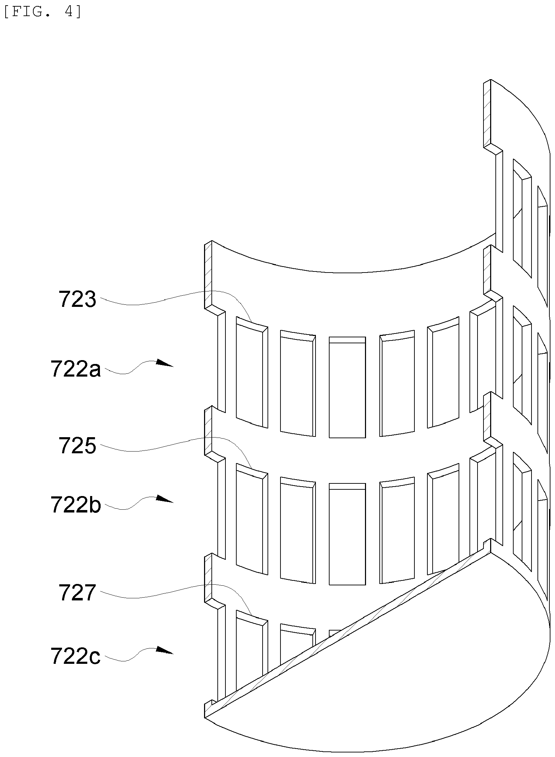

Referring to FIGS. 3 and 4, the mixed gas flow pipe 720 may have a bottom surface and a side surface 722 connecting the bottom surface with the distribution plate.

A plurality of upper apertures 723 may be formed in a side surface of an upper part 722a of the mixed gas flow pipe 720 spaced apart from each other along a circumference of the pipe 720, a plurality of middle apertures 725 may be formed in a side surface of a middle part 722b of the mixed gas flow pipe 720 spaced apart from each other along the circumference, and a plurality of lower apertures 727 may be formed in a side surface of a lower part 722c of the mixed gas flow pipe 720 spaced apart from each other along the circumference. A flow of the mixed gas may be formed through the upper aperture 723, the middle aperture 725, and the lower aperture 727. The mixed gas flow pipe 720 may include a cover 730 surrounding at least some regions of the side surface of the mixed gas flow pipe 720 to provide a space for the fluid flowing out of the side surface of the mixed gas flow pipe 720 after passing through the upper aperture 723 to be guided toward the middle aperture 725. The cover 730 may surround at least one selected from the group consisting of the upper and middle parts of the side surface of the mixed gas flow pipe 720.

The cover 730 may cause the fluid flowing out of the side surface of the mixed gas flow pipe 720 after passing through the upper aperture 723 to be guided toward the middle aperture 725. This configuration may form a flow in which the fluid is moved to the outside of the side surface of the mixed gas flow pipe 720 and then moved back to the inside of the side surface. Through the flow formed in this way, the fluids may be more smoothly mixed with each other.

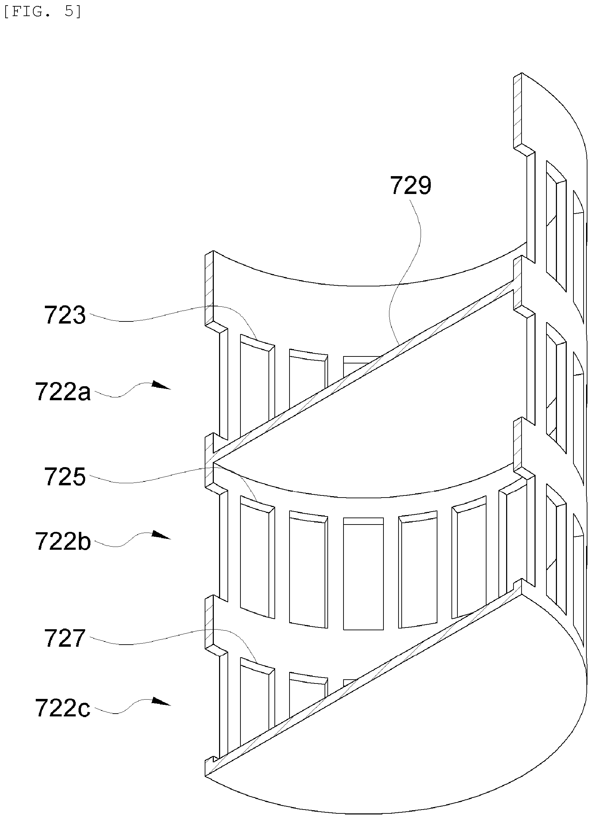

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the movement of the fluid. Therefore, the fluid flowing into the upper part of the mixed gas flow pipe 720 may by the separator plate 729 flow out through the upper aperture 723 into the space between the mixed gas flow pipe 720 and the cover 730 rather than descending directly to the middle part. The fluid in the space may then flow into the mixed gas flow pipe through the middle aperture 725, descend downwards, and flow out of the mixed gas flow pipe 720 through the lower aperture 727. As described above, the fluid may form the flow in which the fluid flows out of the mixed gas flow pipe 720, flows back into the inside of the pipe, and flows out of the pipe again, thereby mixing the fluids more smoothly, and maintaining the uniform flow rate distribution at the front of the catalyst bed.

In another embodiment according to the present disclosure, each of the mixed gas supply lines 50 and 51 may include a flow regulating device. The flow regulating device may permit the flow rate of the mixed gas to be controlled independently in each of the mixed gas supply lines. In detail, the flow regulating device may independently regulate the flow rate of the mixed gas flowing through each of the mixed gas supply lines for the flow rate of the mixed gas entering the distribution device to be maintained within a desired flow rate range.

The flow regulating device may be a flow regulating valve.

In another embodiment according to the present disclosure, each of the mixed gas supply lines 50 and 51 may branch from one main supply line. Alternatively, each of the mixed gas supply lines 50 and 51 may receive at least one gas or both gasses selected from the group consisting of nitrogen and hydrogen from each of individual supply lines.

In another embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate(s) 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save energy by optimizing the amount of energy required by the system as needed during its operation and increase the catalyst replacement cycle by using each catalyst bed uniformly.

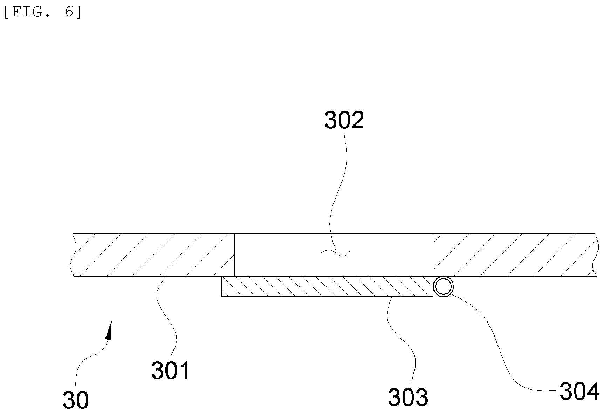

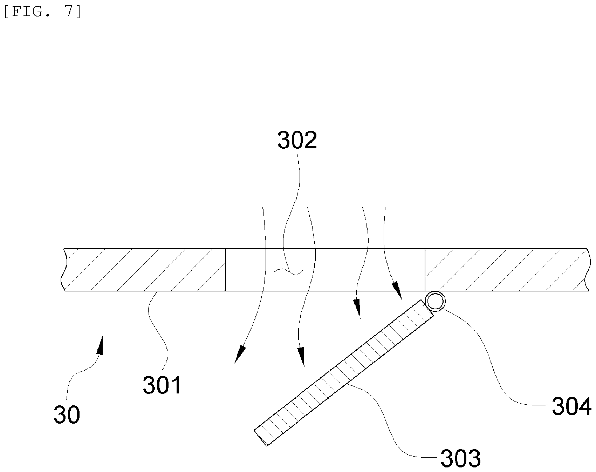

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas is to flow from the downstream to upstream of the backflow prevention plate 30 or 31, the backflow prevention cap 303 will be closed because of the flow of the mixed gas flowing from the downstream to the upstream. By this principle, the backflow prevention plate 30 or 31 according to one embodiment of the present disclosure may prevent the backflow of the mixed gas.

In another embodiment according to the present disclosure, a coupling part of the hinge 304 that is coupled to the hinge 304 may include a spring to apply an elastic force in a direction in which the backflow prevention cap 303 approaches the distribution plate.

In another embodiment according to the present disclosure, the distribution device 40 or 41 may have a disk shape or a toroidal shape, but the embodiments are not limited thereto, and may use a conventional gas distribution device.

In the ammonia synthesis system according to one embodiment of the present disclosure, ammonia may be synthesized at pressures ranging from 1 to 500 bar or 10 to 300 bar.

In addition, in the ammonia synthesis system according to another embodiment of the present disclosure, ammonia may be synthesized at temperatures ranging from 100 to 800°C or 200 to 700°C.

The ammonia synthesis system according to another embodiment of the present disclosure may further include a heat exchanger disposed downstream from each of the two or more catalyst beds to remove heat from an effluent of the catalyst bed. The heat exchanger may surround the catalyst bed or its surroundings. The ammonia synthesis system according to the present disclosure may include an additional heat removal mechanism other than the supply of the cooling mixed gas by further including the heat exchanger. This configuration may permit the flexible operation of the ammonia synthesis system.

In addition, an embodiment of the present disclosure may provide an operation method of the ammonia synthesis system, the method including the following modes selectively performed by the ammonia synthesis system a first mode in which the regeneration stream is recirculated to the feed supply line; and a second mode in which the regeneration stream is not recirculated to the feed supply line. The same description can be applied to a content overlapping a content of the ammonia synthesis system.

In detail, when the fed raw material has the high flow rate, the regeneration stream may be stored in the buffer tank 85 rather than being supplied to the feed supply line 81, as in the second mode. In addition, when the fed raw material has the low flow rate, the surge phenomenon may occur in the compressor 82, which may be prevented by supplying the regeneration stream to the feed supply line 81 as in the first mode. The ammonia synthesis system may flexibly supply the regeneration stream by selectively operating the first mode and the second mode to achieve the stable compressor operation by coping with changes in the flow rate of the raw material.

In addition, the present disclosure may provide an ammonia synthesis method. The same description can be applied to a content overlapping the contents of the ammonia synthesis system and the operation method thereof.

An embodiment of the present disclosure may provide the ammonia synthesis method including S1) compressing mixed gas by a compressor and feeding the compressed gas into an ammonia synthesis reactor; S2) producing syngas including ammonia by reacting the compressed mixed gas by the ammonia synthesis reactor; and S3) separating the syngas produced in S2) into ammonia and a regeneration stream, wherein the regeneration stream is recirculated to the compressor.

In the ammonia synthesis method according to one embodiment of the present disclosure, it is possible to flexibly cope with changes in the flow rate that occur during the production cycle, while preventing the surge phenomenon from occurring in the compressor to permit stable compressor operation, and address the above-noted issues of non-uniform flow rate distribution that occurs at the front of the catalyst bed and reduced ammonia synthesis yield caused by the temperature deviation between the central and outer parts of the catalyst bed at the beginning of the operation. In particular, in the ammonia synthesis method according to one embodiment of the present disclosure, the compressor may be stably operated by preventing the surge phenomenon (or the like) from occurring in the compressor even when the flow rate of the fed raw material for the ammonia synthesis is changed. This configuration is possible by supplying the regeneration stream separated by the ammonia separation device 83 to the feed supply line 81, which is disposed before the compressor, through the feed recirculation line.

In another embodiment according to the present disclosure, the ammonia synthesis method may further include recovering energy included in the regeneration stream. The energy included in the regeneration stream may be recovered through the expander as described above, but the embodiments are not limited thereto. The method may further include the recovering of the energy included in the high pressure regeneration stream, thereby improving the energy efficiency of an overall process.

In another embodiment according to the present disclosure, the ammonia synthesis reactor may include two or more catalyst beds included in the ammonia synthesis reactor; the backflow prevention plate disposed downstream from each of the catalyst beds, optionally except for the catalyst bed disposed at the lowest of the two or more catalyst beds, for preventing the backflow of the mixed gas; the distribution device disposed upstream from each of the two or more catalyst beds and distributing the mixed gas to the catalyst bed; and the mixed gas supply lines arranged to supply the mixed gas to each distribution device.

As set forth above, the ammonia synthesis system according to another embodiment of the present disclosure may cope with changes in the flow rate that occurs during the production cycle.

The ammonia synthesis system according to another embodiment of the present disclosure may maintain the uniform flow rate distribution at the front of the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by reducing temperature deviations between the central and outer parts of the catalyst bed and/or by permitting the temperature of the catalyst to be uniform at the beginning of its operation.

The ammonia synthesis system according to another embodiment of the present disclosure may improve the ammonia synthesis yield at the beginning of its operation by preheating the catalyst bed at the beginning of its operation.

The ammonia synthesis system according to one embodiment of the present disclosure may save energy by optimizing the amount of energy required by the system during its operation.

The ammonia synthesis system according to another embodiment of the present disclosure may increase the catalyst replacement cycle by uniformly using each catalyst bed during the operation.

The ammonia synthesis system according to one embodiment of the present disclosure may stably operate the compressor by preventing the surge phenomenon (or the like) from occurring in the compressor even when the flow rate of the raw material fed into the ammonia synthesis system is changed.

The ammonia synthesis system according to another embodiment of the present disclosure may synthesize ammonia in an eco-friendly manner.

The embodiments described above are only examples to which a principle of the present disclosure is applied, and may further include other embodiments within the scope of the present disclosure. Furthermore, the embodiments may be combined to form additional embodiments.

## Claims

1. An ammonia synthesis system comprising:
a compressor (82) for compressing mixed gas;
a feed supply line (81) for supplying the mixed gas to the compressor (82);
an ammonia synthesis reactor (10) for synthesizing ammonia by feeding the mixed gas compressed by the compressor (82) into the reactor;
an ammonia separation device (83) for separating syngas (91) produced by the ammonia synthesis reactor (10) into ammonia (92) and a regeneration stream (93);
a feed recirculation line (84) for recirculating the regeneration stream (93) to the feed supply line (81); and
a buffer tank (85) installed in the feed recirculation line (84) .

2. The system of claim 1, wherein an expander (86) is installed upstream from the buffer tank (85) in the feed recirculation line (84).

3. The system of claim 1 or 2, further comprising a reactor recirculation line (87) connected from the feed recirculation line (84) to the ammonia synthesis reactor (10).

4. The system of any one of claims 1 to 3, wherein the ammonia synthesis reactor (10) includes:
two or more catalyst beds (20, 21) included in the ammonia synthesis reactor (10);
one or more backflow prevention plate(s) (30, 31), wherein a backflow prevention plate is disposed downstream from each of the catalyst beds (20, 21), optionally except for the catalyst bed disposed at the lowest of the two or more catalyst beds, for preventing a backflow of the mixed gas;
a distribution device (40, 41) disposed upstream from each of the two or more catalyst beds (20, 21) and distributing the mixed gas to the catalyst bed (20, 21); and
mixed gas supply lines (50, 51) arranged to supply the mixed gas to each distribution device (40, 41).

5. The system of claim 4, further comprising microwave heating device(s) (60, 61) for emitting microwaves to each of the two or more catalyst beds (20, 21), respectively.

6. The system of claim 4 or 5, further comprising distribution plates (70, 71) each disposed between the catalyst bed (20, 21) and the distribution device (40, 41).

7. The system of claim 6, further comprising a plurality of mixed gas flow pipes (720) which are fixed to a lower surface of the distribution plate (70, 71) and through which the mixed gas flows.

8. The system of claim 7, wherein the mixed gas flow pipe (720) has a bottom surface and a side surface (722) connecting the bottom surface with the distribution plate (70, 71),
wherein a plurality of upper apertures (723) are formed in a side surface (722) of an upper part (722a) of the mixed gas flow pipe (720) spaced apart from each other along a circumference of the pipe,
wherein a plurality of middle apertures (725) are formed in a side surface (722) of a middle part (722b) of the mixed gas flow pipe (720) spaced apart from each other along the circumference,
wherein a plurality of lower apertures are formed in a side surface (722) of a lower part of the mixed gas flow pipe (720) spaced apart from each other along the circumference, and
optionally wherein the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper aperture (723) to be guided toward the middle aperture (725).

9. The system of claim 8, wherein the mixed gas flow pipe (720) further includes a separator plate (729) dividing the upper and middle parts (722b) of the mixed gas flow pipe (720) from each other.

10. The system of claim 4, further comprising a heat exchanger disposed downstream from each of the two or more catalyst beds (20, 21) to remove heat from an effluent of the catalyst bed (20, 21).

11. An operation method of the ammonia synthesis system of claim 1, the method comprising the following selectively performed modes:
a first mode in which the regeneration stream (93) is recirculated to the feed supply line (81); and
a second mode in which the regeneration stream (93) is not recirculated to the feed supply line (81).

12. The operation method of the ammonia synthesis system of claim 11, which operates by procedure (i) and/or by procedure (ii),
wherein in procedure (i) the operation method selectively switches between the first and second modes dependent on a flow rate of raw material fed into the reactor (10) in order to keep the flow rate of the raw material fed into the ammonia synthesis reactor (10) constant,
wherein optionally the regeneration stream (93) is not fed through the recirculation line (87) to the reactor (10) when flow rate of the raw material fed into the reactor (10) is relatively high,
and the regeneration stream (93) is fed through the recirculation line (87) to the reactor (10) when the flow rate of the raw material fed into the reactor (10) is relatively low;
wherein in procedure (ii) the operation method selectively switches between the first mode and the second mode dependent on the flow rate of the raw material in order to keep a compressor operation stable,
optionally wherein the regeneration stream (93) is stored in the buffer tank (85) and is not supplied to the feed supply line (81) as in the second mode, when the raw material fed into the reactor (10) has a high flow rate,
whereas the regeneration stream (93) is supplied to the feed supply line (81) as in the first mode and is not stored in the buffer tank (85), when the raw material fed into the reactor (10) has a low flow rate.

13. An ammonia synthesis method comprising:
compressing mixed gas by a compressor (82) and feeding the compressed gas into an ammonia synthesis reactor (10);
producing syngas (91) including ammonia by reacting the compressed mixed gas by the ammonia synthesis reactor (10); and
separating the syngas (91) produced into ammonia (92) and a regeneration stream (93),
wherein the regeneration stream (93) is recirculated to the compressor (82).

14. The method of claim13, further comprising recovering energy included in the regeneration stream (93).

15. The method of claim 13 or 14, wherein the ammonia synthesis reactor (10) includes:
two or more catalyst beds (20, 21) included in the ammonia synthesis reactor (10);
one or more backflow prevention plate(s) (30, 31), wherein a backflow prevention plate is disposed downstream from each of the catalyst beds (20, 21), optionally except for the catalyst bed disposed at the lowest of the two or more catalyst beds, for preventing a backflow of the mixed gas;
a distribution device (40, 41) disposed upstream from each of the two or more catalyst beds (20, 21) and distributing the mixed gas to the catalyst bed (20, 21); and
mixed gas supply lines arranged to supply the mixed gas to each distribution device (40, 41).
